Europäisches Patentamt

European Patent Office

Office européen des brevets

(19)

(11) EP 0 785 639 A1

(12) DEMANDE DE BREVET EUROPEEN

(43) Date de publication:
23.07.1997 Bulletin 1997/30

(51) Int Cl.6: H04B 10/18, H04Q 11/00

(21) Numéro de dépôt: 97400083.8

(22) Date de dépôt: 16.01.1997

(84) Etats contractants désignés:
AT BE CH DE ES GB IT LI NL SE

(30) Priorité: 18.01.1996 FR 9600535

(71) Demandeur: ALCATEL ALSTHOM COMPAGNIE
GENERALE D'ELECTRICITE
75008 Paris (FR)

(72) Inventeurs:
• Desurvire, Emmanuel,
d'Alcatel Alsthom Recherche
91680 Bruyères Le Chatel (FR)

• Chesnoy, José, d'Alcatel Alsthom Recherche
75014 Paris (FR)

(74) Mandataire: Fournier, Michel Robert Marie et al
c/o ALCATEL ALSTHOM,
Département de Propriété Industrielle,
30, avenue Kléber
75116 Paris (FR)

(54) Procédé et système de communication optique à routage passif

(57) Selon cette invention le routage d'impulsions optiques portant une information à transmettre est commandé pour chacune de ces impulsions par l'intensité de cette impulsion. Les impulsions peuvent être des solitons. L'invention s'applique notamment aux communications à grande distance.

FIG.1

Printed by Jouve, 75001 PARIS (FR)

EP 0 785 639 A1

## Description

La présente invention concerne notamment un système de communication. Usuellement un tel système relie des abonnés situés à des distances importantes les uns des autres pour leur permettre d'échanger des messages. C'est pourquoi il utilise un support commun pour transmettre plusieurs messages provenant de plusieurs expéditeurs et/ou destinés à plusieurs destinaires. Des moyens de routage sont alors nécessaires pour que chaque message devant être transmis par un tel support soit effectivement dirigé vers ce support et pour que chaque message transmis par ce support soit transmis au destinataire prévu. Pour permettre à ces moyens de routage d'accomplir leur fonction il est usuel que chaque message soit muni d'une adresse définissant son destinaire. Des moyens de routage actifs peuvent comporter des éléments de décision qui lisent seulement cette adresse et qui commandent en conséquence des moyens d'aiguillage qui orientent l'ensemble du message. Des moyens de routage passifs ne comportent pas d'éléments spécifiques de décision c'est à dire que l'adresse est incorporée au message de façon telle que ce dernier apparait s'orienter lui même au sein de ces moyens.

Cette invention concerne plus particulièrement le cas où les messages sont constitués par des successions d'impulsions optiques et, plus particulièrement encore, le cas où ces impulsions prennent la forme de solitons pour pouvoir être transmises sans déformation sur de longues distances. Compte tenu des débits d'information toujours croissants que l'on cherche à transmettre, il est souhaitable que les moyens de routage soient passifs et entièrement optiques c'est à dire que le message avec son adresse reste sous forme optique au sein des moyens de routage.

Des moyens de routage optique passif connus utilisent un multiplexage en longueur d'onde. Le destinaire d'un message est alors défini par la longueur d'onde des impulsions qui constituent ce message, cette longueur d'onde constituant donc l'adresse de ce message. Ces moyens de routage optique passif imposent au réalisateur du système de communication diverses contraintes gênantes telles qu'un espacement minimal entre les canaux spectraux, une platitude suffisante du gain des amplificateurs en fonction de la longueur d'onde, une reconfigurabilité des ensembles d'émission.

La présente invention a notamment pour but de s'affranchir des contraintes imposées par les moyens de routage optique passif connus. Dans ce but elle a notamment pour objet un procédé de communication à routage passif caractérisé par le fait que le routage d'impulsions optiques portant une information à transmettre est commandé pour chacune de ces impulsions par l'intensité de cette impulsion.

A l'aide des figures schématiques ci-jointes on va indiquer ci-après à titre d'exemple comment cette invention peut être mise en oeuvre. Lorsqu'un même élément est représenté sur plusieurs figures il y est désigné par les mêmes chiffres et/ou lettres de référence. Lorsque deux éléments sont désignés par une même lettre suivie de chiffres différents, ces deux éléments sont d'une même nature et assurent des fonctions analogues.

Les figures 1 et 2 représentent respectivement l'ensemble d'émission et les moyens de routage d'un même système de communication.

La figure 3 représente une suite d'impulsions se propageant dans un guide optique commun du système des figures 1 et 2, l'intensité optique étant représentée en ordonnées et le temps en abscisses.

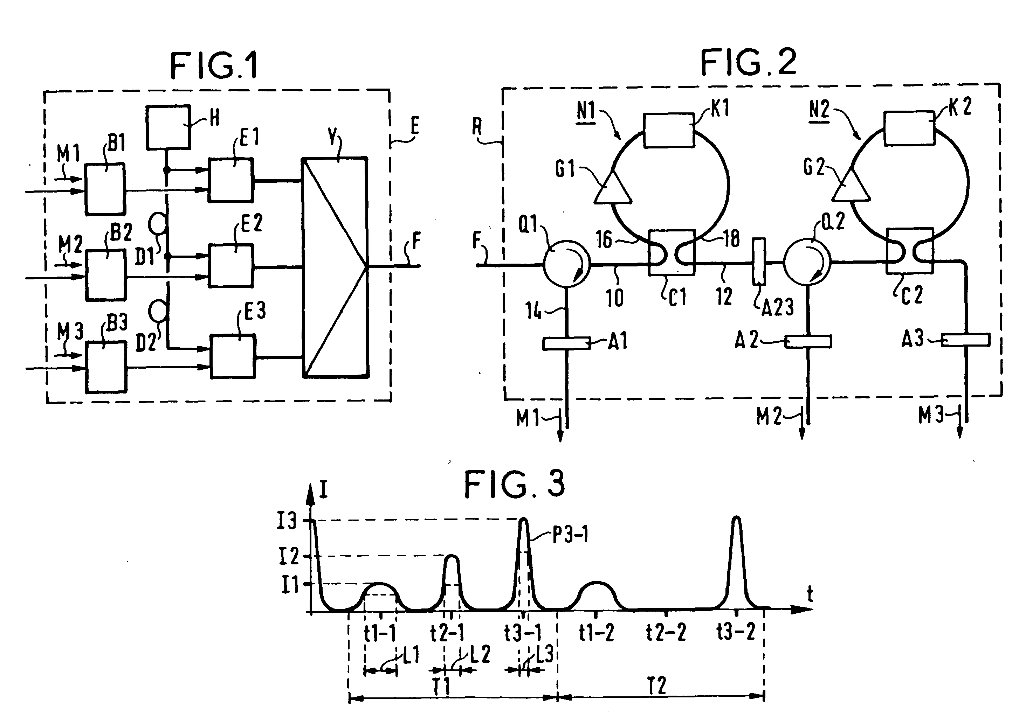

Conformément aux figures 1 et 2 un système de communication comporte les éléments suivants :

- Un ensemble d'émission E pour émettre des messages destinés à une pluralité de destinataires. Chaque message est constitué par des impulsions telles que P3-1 (voir figure 3) et il porte à la fois des informations à transmettre à l'un des dits destinaires et une adresse de ce message désignant ce destinaire. Ces impulsions sont de nature optique.

- Un support optique commun F pour recevoir et pour transmettre au moins localement les messages. Typiquement ce support transmet les messages sur une distance telle qu'il est avantageusement constitué par un guide tel qu'une fibre optique ou une succession de telles fibres.

- Enfin des moyens de routage R recevant les messages transmis par ce support. Ces moyens doivent être sensibles aux adresses de ces messages pour envoyer chacun d'entre eux sur une route menant au destinaire désigné par l'adresse de ce message.

Conformément à la présente invention l'ensemble d'émission E donne à chacune des impulsions telles que P3-1 de chaque message une intensité telle que 13 constituant au moins partiellement l'adresse de ce message.

De manière usuelle les impulsions portent l'information à transmettre d'une manière rythmée et binaire. Plus précisément pour chaque message ou partie de message, elles ne peuvent être présentes en un point donné du système qu'à des instants d'horloge appartenant à une succession régulière d'instants, et l'information est portée par la présence ou l'absence d'une telle impulsion à chacun de ces instants. La présente invention pourrait cependant trouver aussi application dans d'autres cas, par exemple celui où l'information serait portée par des décalages temporels des impulsions de part et d'autre des instants d'horloge.

Dans un cas simple l'intensité des impulsions d'un message constitue complètement l'adresse de ce message. Ce cas simple peut être réalisé dans un réseau de communication ou dans une fraction d'un tel réseau lorsque le nombre des destinaires abonnés n'y dépasse pas le nombre des intensités différentes qui peuvent être distinguées sans risque d'erreur par les moyens de routage. Dans d'autres cas l'adresse peut être complétée par d'autres éléments tels qu'une tête de message, voire la longueur d'onde des impulsions si des moyens de routage sensibles à l'intensité des impulsions étaient précédés de moyens de séparation en longueur d'onde.

Dans des cas où des messages doivent être transmises par une ligne constituée de fibres optiques présentant une dispersion chromatique décalée et un effet Kerr et où cette ligne a une grande longueur pouvant atteindre plusieurs milliers de kilomètre, il est connu de donner aux impulsions de ces messages des formes, des intensités et des largeurs à mi-hauteur telles que dans ces fibres, elles constituent des solitons pouvant se propager sans déformation. De manière connue les solitons ont tous une même intensité et la conservation de leur forme permet une augmentation de la distance de la transmission et/ou de son débit.

C'est pourquoi, dans le cas où divers messages émis par l'ensemble d'émission E doivent ensuite être transmis par une même ligne de grande longueur, qui peut notamment constituer ledit support commun, ou par diverses lignes de grande longueur du genre ci-dessus présentant des caractéristiques analogues quant à la dispersion et à l'effet Kerr, cet ensemble d'émission donne avantageusement aux impulsions de ces messages diverses largeurs à mi-hauteur L1, L2, L3. Ces largeurs sont respectivement adaptées à leurs intensité 11, 12, 13 par une relation

$$Ii.Li^2 = constante,$$

la lettre i désignant successivement les chiffres 1,2 et 3. Cette constante et la forme de ces impulsions sont telles que ces impulsions constituent des solitons dans la ou les dites lignes de grande longueur. Cette disposition associe l'avantage de conservation de forme propre aux solitons avec les avantages d'un élément d'adresse indépendant de la longueur d'onde et porté par chaque impulsion.

Conformément à la figure 3 les impulsions telles que P3-1 de chaque message définissent des instants d'horloge t1-1...t3-2 de ces impulsions. Au moins un des messages constitue un message fractionné et au moins deux instants d'horloge t1-1,t1-2 des impulsions de chaque message fractionné sont mutuellement séparées par au moins un instant d'horloge t2-1 des impulsions d'un autre message.

De préférence l'ensemble d'émission E réalise sur des périodes bit successives (T1,T2) un multiplexage temporel d'une pluralité de canaux multiplexés transmettant respectivement plusieurs dits messages fractionnés. Ces canaux ont des intensités (l1....l3) et des instants d'horloge $(t_1-1, ...t_3-2)$ respectifs constituant respectivement les intensités d'impulsions et les instants d'horloge de ces messages. Chacune des périodes bit comporte un instant d'horloge de chacun des canaux multiplexés. Cette disposition évite qu'une impulsion soit transmise à coté d'une autre impulsion ayant la même intensité. Elle limite ainsi, au moins dans le cas où les impulsions sont des solitons, les effets d'interactions parasites qui peuvent se produire entre des impulsions trop voisines. Elle peut donc permettre de rapprocher ces impulsions pour augmenter le débit transmis. Il peut cependant être parfois plus simple de transmettre chaque message sous la forme de séquences comportant chacune une pluralité d'impulsions appartenant exclusivement à ce message, deux séquences d'un message étant séparées par au moins une séquence d'un autre message.

Conformément à la figure 1, l'ensemble d'émission E comporte par exemple les éléments suivants :

-   Des mémoires tampons B1, B2 et B3 dont chacune est respectivement associée à un canal pour recevoir et conserver les messages à émettre dans ce canal.

-   Des émetteurs EI, E2 et E3. Chaque tel émetteur est associé à un canal et commandé par la mémoire tampon correspondante. Il émet des impulsions de message ayant une longueur d'onde du système et l'intensité du canal correspondant c'est à dire respectivemnt I1, I2 et I3. Ces impulsions portent les messages qui ont été reçus par la mémoire tampon associée.

-   Une horloge H synchronisant chaque émetteur pour lui faire émettre les impulsions de message aux instants d'horloge du canal associé à cet émetteur. Cette horloge fournit par exemple une impulsion d'horloge au début de chaque période bit pour synchroniser l'émetteur E1 et cette impulsion d'horloge parcourt des lignes à retard telles que D1 et D2 avant de synchroniser les émetteurs E2 et E3.

-   Enfin un multiplexeur Y injectant toutes les impulsions de message dans une ligne à fibres optiques F constituant le dit support commun.

Conformément à la figure 2 l'ensemble de routage R comporte par exemple les éléments suivants :

-   Un séparateur d'intensité N1 ayant un seuil de séparation et incluant un guide mixte 10 et un guide de sortie de transmission 12. Ce séparateur reçoit chaque impulsion de message par ce guide mixte. Soit il la transmet vers le guide de sortie de transmission, soit il la réfléchit vers le guide mixte dans un sens inverse opposé au sens direct, selon que l'intensité de cette impulsion est d'un côté ou de l'autre du seuil de séparation.

-   Enfin un séparateur de direction Q1 disposé en série sur le guide mixte 10 et ayant un guide de sortie de réflexion 14. Ce séparateur laisse passer les impulsions qui se propagent dans le sens direct dans le guide mixte 10 et il dirige vers le guide de sortie de reflexion 14 les impulsions qui ont été réfléchies par le séparateur d'intensité. Il est par exemple constitué par un circulateur optique qui, par rapport un autre type de séparateur possible qui serait constitué par une lame séparatrice semi-transparente inclinée, évite l'inconvénient d'une perte de puissance.

De préférence chaque organe de routage de la figure 2 comporte en outre un absorbant saturable A1, A23 sur chacun des guides de sortie de réflexion 14 et de sortie de transmission 12. En présence d'une sélectivité imparfaite du séparateur d'intensité un tel absorbant convenablement réglé permet d'absorber complètement des impulsions résiduelles parasites que ce séparateur a pu envoyer vers un guide de sortie incorrect. Il limite ainsi la diaphonie.

Chaque séparateur d'intensité est avantageusement constitué par un miroir en boucle amplifiée non linéaire tel que N1 qui comporte un coupleur d'entrée du type 50/50 tel que C1. Le coupleur C1 a un premier et un deuxième guide interne 16 et 18 respectivement en continuité avec le guide mixte 10 et le guide de sortie de transmission 12. Chaque tel séparateur comporte en outre un groupement série constitué d'un amplificateur G1 et d'un milieu non linéaire K1 à temps de propagation dépendant de l'intensité. Ce groupement est connecté entre les premier et deuxième guides internes. La constitution d'un séparateur d'intensité optique par un tel miroir est notamment décrite dans un article Optics letters: vol.15,No13/July, 1990, Nonlinear amplifying loop mirror, M. E. Fermann, F. Haberl, M. Hofer, and H. Hochreiter, page 752-754. Un autre type de séparateur d'intensité peut être constitué par un interféromètre du type Mach-Zehnder qui présente l'avantage parfois important de pouvoir être intégré sur un substrat semi-conducteur. Un autre type de séparateur peut encore être constitué par un réseau de Bragg non linéaire intégré dans la fibre optique.

Sur la figure 3 les intensités des canaux associés aux émetteurs E1, E2 et E3 sont respectivement celles qui ont été représentées en 11,12 et 13. Elles forment une suite croissant dans cet ordre. Le gain de l'amplificateur G1 et le milieu non linéaire K1 sont choisis par exemple pour qu'un premier séparateur d'intensité N1 réféchisse seulement les impulsions dont l'intensité est inférieure à un seuil compris entre les intensités I1 et I2. De plus ce gain est saturé à partir de l'intensité 12. Un deuxième séparateur d'intensité du même type N2 présente alors un seuil de séparation compris entre les intensités 12 et 13.
A titre d'exemple numérique de mise en oeuvre d'un système de l'invention utilisant des solitons, on peut indiquer une période bit de 100ps, un rapport d'intensité entre canaux égal à 2 (I1/I2 = I2/I3 etc...= 1/2), un nombre de canaux égal à 4, une largeur à mi hauteur des impulsions les plus courtes de l'ordre de L4=5ps, ces impulsions les plus courtes ayant l'intensité la plus grande 14, et une largeur à mi-hauteur des impulsions les plus longues de l'ordre de $L1= \sqrt{8}$ x5=14ps, ces impulsions les plus longues ayant l'intensité la plus petite II = 14/8.

**Revendications**

1. Procédé de communication optique à routage passif caractérisé par le fait que le routage d'impulsions optiques portant une information à transmettre est commandé pour chacune de ces impulsions par l'intensité de cette impulsion.

2. Système de communication optique à routage passif comportant:

   - un ensemble d'émission (E) pour émettre des messages destinés à une pluralité de destinaires, chaque dit message étant constitué par des impulsions (telles que P3-1) de ce message et portant à la fois des informations à transmettre à l'un desdits destinaires et une adresse de ce message désignant ce destinataire, les dites impulsions étant de nature optique,
   - un support optique commun (F) pour recevoir et transmettre lesdits messages, et
   - des moyens de routage (R) pour recevoir les messages transmis par le dit guide, ces moyens étant sensibles auxdites adresses pour orienter chaque dit message transmis vers celui desdits destinaires qui est désigné par l'adresse de ce message,

   ce système étant caractérisé par le fait que ledit ensemble d'émission (E) donne à chacune desdites impulsions (telles que P3-1) de chaque dit message une intensité (telle que 13) constituant au moins partiellement ladite adresse de ce message.

3. Système selon la revendication 2, ce système étant caractérisé en outre par le fait que ledit ensemble d'émission donne auxdites impulsions (telles que P3-1) des largeurs à mi-hauteur (L1...L3) respectivement adaptées à leurs intensités (I1...I3) pour que ces impulsions puissent constituer des solitons dans au moins une ligne de transmission optique (F).

4. Système selon la revendication 2, lesdites impulsions (telles que P3-1) de chaque dit message définissant des instants d'horloge (t1-1...t3-2) de ces impulsions, au moins un desdits messages constituant un message fractionné, au moins deux instants d'horloge (t1-1,t1-2) d'impulsions de chaque dit message fractionné étant mutuellement séparées par au moins un instant d'horloge (t2-1) d'impulsions d'un autre dit message.

5. Système selon la revendication 4, ledit ensemble d'émission (E) réalisant sur des périodes bit successives (T1,T2) un multiplexage temporel d'une pluralité de canaux multiplexés transmettant respectivement plusieurs dits messages fractionnés, ces canaux ayant des intensités (I1....I3) et des instants d'horloge ($t_1$-1, ...$t_3$-2) respectifs constituant respectivement les intensités d'impulsions et les instants d'horloge de ces messages, chacune desdites périodes bit comportant un instant d'horloge de chacun desdits canaux multiplexés.

6. Système selon la revendication 5, le dit ensemble d'émission comportant pour chaque dit canal

- une mémoire tampon (B1,...B3) associée à ce canal pour recevoir et conserver temporairement les dits messages à émettre dans ce canal, et
- un émetteur (E1....E3) associé à ce canal et commandé par cette mémoire tampon pour émettre desdites impulsions de message ayant une longueur d'onde dudit système et ladite intensité de ce canal (I1...I3) et portant lesdits messages reçus et temporairement conservés par cette mémoire tampon, le dit ensemble d'émission comportant en outre :
- une horloge (H) synchronisant chaque dit émetteur pour lui faire émettre les dites impulsions de message auxdits instants d'horloge du canal associé à cet émetteur, et
- un multiplexeur (Y) injectant toutes lesdites impulsions de message dans ledit support optique commun (F).

7. Système selon la revendication 2, lesdits moyens de routage comportant au moins un organe de routage comportant lui même :

- un séparateur d'intensité (N1) ayant un seuil de séparation et incluant un guide mixte (10) et un guide de sortie de transmission (12), ce séparateur recevant chaque dite impulsion de message par ce guide mixte pour, soit la transmettre vers ledit guide de sortie de transmission, soit la réfléchir vers ledit guide mixte dans un sens inverse opposé audit sens direct, selon que l'intensité de cette impulsion est d'un côté ou de l'autre dudit seuil de séparation, et
- un séparateur de direction (Q1) disposé en série sur ledit guide mixte (10) et ayant un guide de sortie de réflexion (14) pour laisser passer lesdites impulsions de message dans ledit sens direct dans ce guide mixte et pour diriger vers ce guide de sortie de reflexion (14) lesdites impulsions de message réfléchies par ledit séparateur d'intensité.

8. Système selon la revendication 7, ledit organe de routage (N1) comportant en outre un absorbant saturable (A1, A23) sur au moins l'un desdits guides de sortie de reflexion (14) et de sortie de transmission (12).

9. Système selon la revendication 7, ledit séparateur d'intensité étant un miroir en boucle amplifiée non linéaire (N1) comportant :

- un coupleur d'entrée du type 50/50 (C1) ayant un premier et un deuxième guides internes (16,18) respectivement en continuité avec ledit guide mixte (10) et ledit guide de sortie de transmission (12), et
- un groupement série constitué d'un amplificateur (G1) et d'un milieu non linéaire (K1) à temps de propagation dépendant de l'intensité, ce groupement étant connecté entre lesdits premier et deuxième guides internes.

10. Système selon la revendication 7, lesdits moyens de routage comportant plusieurs dits organes de routage (N1,N2) connectés en série et ayant des seuils d'intensité étagés.

FIG.1

FIG.2

FIG. 3

**Office européen des brevets**

# RAPPORT DE RECHERCHE EUROPEENNE

Numero de la demande

EP 97 40 0083

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 4 065 644 A (SHINOSKY, JR)<br>* colonne 21, ligne 61 - colonne 24, ligne 2; figure 4 *<br>--- | 1 | H04B10/18<br>H04Q11/00 |
| A | ELECTRONICS LETTERS,<br>vol. 31, no. 3, 2 Février 1995, STEVENAGE GB,<br>pages 217-219, XP000504222<br>AUBIN ET AL.: "Record amplifier span of 105 km in a soliton transmission experiment at 10 Gbit/s over 1 Mm"<br>* page 217, colonne de droite, dernier alinéa - page 218, colonne de gauche, alinéa 1; figure 1 *<br>--- | 2-10 | |
| A | US 5 483 340 A (WEBB ET AL.)<br>* colonne 3, ligne 31 - colonne 5, ligne 28; figure 2 *<br>--- | 2-10 | |
| A | EP 0 566 464 A (ALCATEL CIT)<br>* abrégé *<br>* colonne 2, ligne 7 - colonne 3, ligne 5; figure 1 *<br>--- | 2-6 | |
| A | PROCEEDINGS OF THE IEEE,<br>vol. 81, no. 11, Novembre 1993, NEW YORK US,<br>pages 1633-1646, XP000421171<br>SHIMADA ET AL.: "Very-high-speed optical signal processing"<br>* page 1639, colonne de gauche, ligne 1 - page 1641, colonne de droite, ligne 2; figure 14 *<br>--- | 2,7-10 | |

**DOMAINES TECHNIQUES RECHERCHES (Int.Cl.6)**

H04B
H04Q

-/--

Le présent rapport a été établi pour toutes les revendications

| Lieu de la recherche | Date d'achèvement de la recherche | Examinateur |
|---|---|---|
| LA HAYE | 17 Avril 1997 | Lambley, S |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................
& : membre de la même famille, document correspondant

EPO FORM 1503 03.82 (P04C02)

Office européen
des brevets

**RAPPORT DE RECHERCHE EUROPEENNE**

Numero de la demande

EP 97 40 0083

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | ELECTRONICS LETTERS, vol. 31, no. 17, 17 Août 1995, STEVENAGE GB, pages 1473-1475, XP000528989 MIDRIO ET AL.: "Polarisation-multilevel soliton transmission" ----- | | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 17 Avril 1997 | Lambley, S |